(19) **Europäisches Patentamt / European Patent Office / Office européen des brevets**

(11) **EP 4 617 496 A1**

(12) # EUROPEAN PATENT APPLICATION

(43) Date of publication:
**17.09.2025 Bulletin 2025/38**

(21) Application number: **24203000.5**

(22) Date of filing: **26.09.2024**

(51) International Patent Classification (IPC):
**F04D 1/00** (2006.01)     **F04D 29/02** (2006.01)
**F04D 29/22** (2006.01)     **F04D 29/24** (2006.01)
**F04D 29/42** (2006.01)     **F04D 29/66** (2006.01)

(52) Cooperative Patent Classification (CPC):
**F04D 1/00; F04D 29/026; F04D 29/2216;
F04D 29/2222; F04D 29/24; F04D 29/426;
F04D 29/4273; F04D 29/669**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.03.2024 CN 202410275313**

(71) Applicant: **Anhui Shinhoo Canned Motor Pump
Co., Ltd.
Hefei City, Anhui Province 230000 (CN)**

(72) Inventors:
• **HAN, Zongmei
Hefei City, Anhui Province, 230000 (CN)**
• **LIU, Zhenteng
Hefei City, Anhui Province, 230000 (CN)**
• **JIAO, Pengwei
Hefei City, Anhui Province, 230000 (CN)**

(74) Representative: **Dennemeyer & Associates S.A.
Postfach 70 04 25
81304 München (DE)**

(54) **A LOW-NOISE HYDRAULIC DESIGN METHOD FOR A PUMP AND A PUMP**

(57)     The present invention relates to a low-noise hydraulic design method for a pump and a pump, the design method includes the following steps: step S1: calculating a specific speed of the pump; step S2: designing an impeller: step S21: determining a number Z of blades of the impeller based on the specific speed of the pump calculated in step S1 and a correspondence table between the specific speed of a pump and the number of blades; Step S22: determining a diameter $D_1$ of an impeller entrance:

$$D_1 = k_1 \sqrt[3]{\frac{Q}{n}}$$

, wherein n is the rated speed of the pump, Q is the rated flow of the pump, and $k_1$ is a noise reduction coefficient of the impeller entrance, and the noise reduction coefficient $k_1$ of the impeller entrance is 4.5-5.0. The impeller designed according to the above steps can reduce the flow velocity at the impeller entrance and avoid local cavitation at the edge of the blade entrance through the designed impeller entrance; can avoid resonance with motor tooth slots and other components and reduce noise and play a role in noise reduction through the designed number of blades.

**EP 4 617 496 A1**

FIG. 1

**Description**

Technical field

The present invention relates to the field of pump design, in particular to a low-noise hydraulic design method for a pump and a pump designed therewith.

Background

Pumps can convert mechanical energy into fluid energy to transport fluids to high position or higher-pressure spaces or overcome pipeline resistance to transport fluids to distant places. As society develops, people have increasingly high requirements for noise reduction in pumps.

The noise of pumps includes electromagnetic radiation noise, mechanical vibration noise, and fluid-induced noise, which seriously affects people's quality of life and product experience. Among them, fluid-induced noise can spread along the pipeline to distant places with the transport medium, and even amplify the noise exponentially due to resonance with the pipeline, causing greater harm.

Therefore, there is an urgent need for a low-noise hydraulic design method for a pump and a pump designed therewith to solve the above technical problems.

Summary of Invention

An object of the present invention is to provide a low-noise hydraulic design method for a pump to at least solve one of the above technical problems.

In order to achieve the above object, the present invention provides a low-noise hydraulic design method for a pump, comprising the following steps:

Step S1: calculating a specific speed $n_s$ of the pump: $n_s = \dfrac{3.65 n\sqrt{Q}}{\sqrt[4]{H^3}}$ , wherein, n is a rated speed of the pump, Q is a rated flow of the pump, and H is a rated head of the pump;

Step S2: designing an impeller, the step S2 comprising the following steps:

Step S21: determining a number Z of blades of the impeller based on the specific speed $n_s$ of the pump calculated in step S1;

when $30 < n_s \leq 45$, the number Z of the blades is 11;

when $45 < n_s \leq 60$, the number Z of the blades is 7;

when $60 < n_s \leq 120$, the number Z of the blades is 7;

when $n_s > 120$, the number Z of the blades is 5; and

Step S22: determining a diameter $D_1$ of an impeller entrance: $D_1 = k_1 \sqrt[3]{\dfrac{Q}{n}}$ , wherein n is the rated speed of the pump, Q is the rated flow of the pump, $k_1$ is a noise reduction coefficient of the impeller entrance, and the noise reduction coefficient $k_1$ of the impeller entrance is 4.5-5.0.

Further the low-noise hydraulic design method for a pump further comprises the following steps: step S3: designing an entrance segment structure of the pump, wherein the entrance segment structure comprises an elbow segment provided with an entrance segment outlet, and a lofting segment provided with an entrance segment inlet, and the elbow segment and the lofting segment are connected, the step S3 comprising the following steps:

Step S31: determining a diameter $D_2$ of the entrance segment inlet and a diameter $D_3$ of the entrance segment outlet:

$$D_2 = D_3 = k_d \sqrt[3]{\dfrac{Q}{n}}$$ , wherein n is the rated speed of the pump, Q is the rated flow of the pump, $k_d$ is a noise reduction coefficient of the entrance segment structure, and the noise reduction coefficient $k_d$ of the entrance segment structure is 4.5-5.0;

Step S32: determining a bending inner radius $A_1$ of the elbow segment based on the diameter $D_2$ of the entrance segment inlet; and

Step S33: determining a bending inner radius $A_2$ of the lofting segment based on a length of the entrance segment structure and a noise reduction effect, while maintaining the cross-sectional area of the lofting segment constant or varying uniformly.

Further, the bending inner radius $A_1$ of the elbow segment is 0.4-0.6 times the diameter $D_2$ of the entrance segment inlet.

Further, the bending inner radius $A_1$ of the elbow segment is 0.6 times the diameter $D_2$ of the entrance segment inlet.

Further, the step S3 further comprises step S34: determining a bending outer radius $A_3$ of the elbow segment: $A_3 = A_1 + D_3$.

Further, the step S3 further comprises step S35: determining a bending outer radius $A_4$ of the lofting segment: $A_4 = A_2 + D_2$.

Further, the low-noise hydraulic design method for a pump further comprises the following steps: step S4: designing a volute chamber of the pump, the step S4 comprising the following steps:

Step S41: determining a base circle radius $D_4$ of the volute chamber: $D_4 = 1.08 * D_5$, wherein $D_5$ is an outer diameter of the impeller; and

Step S42: determining the cross-sectional area $S_8$ of an eighth section, the step S42 comprising the following steps:

determining a flow velocity v of the eighth section: $\mathbf{v} = k_v \sqrt{2gH}$, wherein H is the rated head of the pump, $k_v$ is a flow velocity noise reduction coefficient of the eighth section, and the flow velocity noise reduction coefficient $k_v$ of the eighth section is obtained based on the specific speed $n_s$ of the pump;

determining a flow $Q_8$ of the eighth section: $Q_8 = \dfrac{360 - \varphi_0}{360} Q$, wherein Q is the rated flow of the pump, $\varphi_0$ is an angle at which a volute tongue is placed; and

determining the cross-sectional area $S_8$ of the eighth section: $S_8 = Q_8 / v$.

Further, the specific speeds $n_s$ of the pump within different preset ranges correspond to different preset values of the flow velocity noise reduction coefficient $k_v$ of the eighth section.

Further, a correspondence between the specific speed $n_s$ of the pump and the flow velocity noise reduction coefficient $k_v$ of the eighth section is as follows:

when $30 < n_s \leq 45$, the flow velocity noise reduction coefficient $k_v$ of the eighth section is 0.5;

when $45 < n_s \leq 60$, the flow velocity noise reduction coefficient $k_v$ of the eighth section is 0.45;

when $60 < n_s \leq 120$, the flow velocity noise reduction coefficient $k_v$ of the eighth section is 0.375;

when $n_s > 120$, the flow velocity noise reduction coefficient $k_v$ of the eighth section (23) is 0.3.

Another object of the present application is to provide a pump to at least solve one of the above technical problems.

In order to achieve the above object, the present invention provides a pump, which is designed according to the low-noise hydraulic design method for a pump according to any one of the above embodiments.

The beneficial effects of the invention are as follows:
the low-noise hydraulic design method for a pump provided in the present invention comprises the following steps:

Step S1: calculating a specific speed $n_s$ of the pump: $n_s = \dfrac{3.65n\sqrt{Q}}{\sqrt[4]{H^3}}$ , wherein, n is a rated speed of the pump, Q is a rated flow of the pump, and H is a rated head of the pump; and

Step S2: designing an impeller, the step S2 comprising the following steps:

Step S21: determining a number Z of blades of the impeller based on the specific speed $n_s$ of the pump calculated in step S1;

when $30 < n_s \leq 45$, the number Z of the blades (202) is 11;

when $45 < n_s \leq 60$, the number Z of the blades (202) is 7;

when $60 < n_s \leq 120$, the number Z of the blades (202) is 7;

when $n_s > 120$, the number Z of the blades (202) is 5; and

Step S22: determining a diameter $D_1$ of an impeller entrance: $D_1 = k_1 \sqrt[3]{\dfrac{Q}{n}}$ , wherein n is the rated speed of the pump, Q is the rated flow of the pump, $k_1$ is a noise reduction coefficient of the impeller entrance, and the noise reduction coefficient $k_1$ of the impeller entrance is 4.5-5.0.

The impeller designed according to the above steps can reduce the flow velocity at the impeller entrance and avoid local cavitation at the edge of the blade entrance through the designed impeller entrance; can avoid resonance with motor tooth slots and other components and reduce noise and play a role in noise reduction through the designed number of blades.

Description of the Drawings

FIG. 1 is a structural schematic diagram of a pump provided by an embodiment of the present invention;

FIG. 2 is a sectional view of a pump provided by an embodiment of the present invention;

FIG. 3 is a structural schematic diagram of an impeller provided by an embodiment of the present invention;

FIG. 4 is a frequency spectrum diagram of a transient simulation of a pump which is obtained by designing according to the number of blades provided in an embodiment of the present invention under rated flow and rated speed conditions;

FIG. 5 is a frequency spectrum diagram of a transient simulation of a pump which is obtained by designing not according to the number of blades provided in an embodiment of the present invention under rated flow and rated speed conditions;

FIG. 6 is a cloud map of the bubble volume fraction at the impeller entrance provided by an embodiment of the present invention when $k_1$ is 5.25 (greater than 5);

FIG. 7 is a cloud map of the bubble volume fraction at the impeller entrance provided by an embodiment of the present invention when $k_1$ is 4.75 (between 4.5 and 5);

FIG. 8 is a cloud map of the bubble volume fraction at the impeller entrance provided by an embodiment of the present invention when $k_1$ is 4.5;

FIG. 9 is a cloud map of the bubble volume fraction at the impeller entrance provided by an embodiment of the present invention when $k_1$ is 4.0;

FIG. 10 is a schematic diagram of an entrance segment structure provided by an embodiment of the present invention;

FIG. 11 is a cloud map of the entrance flow velocity of the entrance segment structure provided by an embodiment of the present invention when $k_d$ is 5.25 (greater than 5);

FIG. 12 is a cloud map of the entrance flow velocity of the entrance segment structure provided by an embodiment of the present invention when $k_d$ is 4.75 (between 4.5 and 5);

FIG. 13 is a cloud map of the entrance flow velocity of the entrance segment structure provided by an embodiment of the present invention when $k_d$ is 4.5;

FIG. 14 is a cloud map of the entrance flow velocity of the entrance segment structure provided by an embodiment of the present invention when kd is 4.0;

FIG. 15 is a diagram of the change in maximum flow velocity of the entrance segment structure provided by an embodiment of the present invention at different values of $k_d$;

FIG. 16 is a pressure cloud map of the entrance segment structure and the impeller which is obtained by designing according to the entrance segment structure provided by an embodiment of the present invention;

FIG. 17 is a pressure cloud map of the entrance segment structure and the impeller which is obtained by designing not according to the entrance segment structure provided by an embodiment of the present invention;

FIG. 18 is a structural schematic diagram of a pump housing according to an embodiment of the present invention;

FIG. 19 is a sectional view of a pump housing provided by an embodiment of the present invention;

FIG. 20 is a schematic diagram of a volute chamber provided by an embodiment of the present invention;

FIG. 21 is a schematic diagram of the relationship between the sound pressure level and the base circle coefficient obtained from the transient simulation of the pump under the condition of rated flow and rated speed, obtained by designing according to the volute chamber provided by an embodiment of the present invention;

FIG. 22 is a velocity vector diagram of a volute chamber which is obtained by designing according to the volute chamber provided by an embodiment of the present invention;

FIG. 23 is a velocity vector diagram of a volute chamber which is obtained by designing not according to the volute chamber provided by an embodiment of the present invention;

In these figures:

100: pump housing; 200: impeller; 201: the impeller entrance; 202: blades;
1: entrance segment structure; 2: volute chamber;
11: entrance segment inlet; 12: entrance segment outlet; 13: elbow segment; 14: lofting segment; 21: volute chamber outlet; 22: volute tongue; 23: eighth section.

Description of specific embodiments

The technical solution of the present invention is further described below in conjunction with the accompanying drawings and through specific embodiments. It is understood that the specific embodiments described herein are only used to explain the present invention and are not intended to limit the present invention. It is also necessary to note that, for ease of description, only the relevant parts of the drawings are shown, not all of them.

Some orientation words are defined in the present invention. In the absence of contrary instructions, the use of orientation words such as "up", "down", "left", "right", "inside", and "outside" is for ease of understanding and does not constitute a limitation on the scope of protection of the present invention.

In the present invention, unless otherwise specified and defined, the first feature "above" or "below" the second feature can include the first feature directly contacting with the second feature or can include the first feature contacting with the second feature through another feature between them. Moreover, the first feature "on", "above" and "over" the second feature include the first feature directly above and obliquely above the second feature, or simply indicate that the horizontal height of the first feature is higher than that of the second feature. Moreover, the first feature "below", "under" and "underneath" the second feature include the first feature directly below and obliquely below the second feature, or simply indicate that the horizontal height of the first feature is lower than that of the second feature.

In the description of the present invention, unless otherwise explicitly specified and limited, the terms "connect", "couple", and "fix" should be broadly understood. For example, they may be fixed connections, removable connections, or integrated; they may be mechanical connections or electrical connections; they can be directly connected or indirectly connected through intermediate media; they can be the internal connection of two components or the interaction between two components. For those skilled in the art, the specific meaning of the above terms in the present invention can be understood based on specific circumstances.

The embodiment provides a low-noise hydraulic design method for a pump, which can achieve good noise reduction effects for the pump obtained according to the above design method.

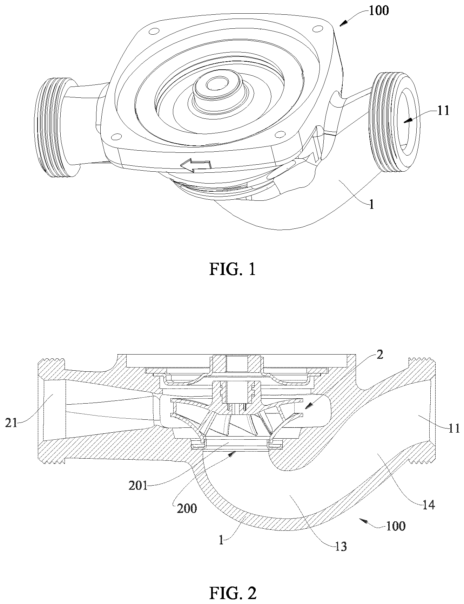

In order to facilitate a better understanding of the low-noise hydraulic design method of the pump below, a brief description of the specific structure of the pump is provided first. As shown in FIG 1 and FIG 2, a pump includes a pump housing 100 and an impeller 200, which is rotatably disposed inside the pump housing 100. By converting the mechanical energy of rotation of the impeller 200 into fluid energy, it can transport fluid to distant or higher-pressure spaces.

Further, a volute chamber 2 is provided inside the pump housing 100, and the impeller 200 is rotatably disposed inside the volute chamber 2.

Further, the pump housing 100 includes an entrance segment structure 1, which includes an entrance segment inlet 11 and an entrance segment outlet 12. The entrance segment outlet 12 is connected to the volute chamber 2. The pump housing 100 also includes a volute chamber outlet 21. Fluid flows from the entrance segment inlet 11 into the pump housing 100, and from the entrance segment outlet 12 into the impeller 200 located in the volute chamber 2. After being pressurized, the fluid flows out of the pump housing 100 through the volute chamber outlet 21.

Further, the entrance segment structure 1 includes an elbow segment 13 and a lofting segment 14, which are connected. The entrance segment inlet 11 is disposed on the lofting section 14, and the entrance segment outlet 12 is disposed on the elbow section 13.

The low-noise hydraulic design method for a pump comprises the following steps:

Step S1: calculating a specific speed $n_s$ of the pump: $$n_s = \frac{3.65n\sqrt{Q}}{\sqrt[4]{H^3}}$$ , wherein, n is a rated speed of the pump, Q is a rated flow of the pump, and H is a rated head of the pump;

Step S2: designing an impeller 200, the step S2 comprising the following steps:

Step S21: determining a number Z of blades 202 of the impeller 200 based on the specific speed $n_s$ of the pump calculated in step S 1 and a correspondence table between the specific speed of a pump and the number of blades 202, the correspondence table of the specific speed $n_s$ of the pump and the number Z of blades 202 is as follows:

| $n_s$ | 30~45 | 45~60 | 60~120 | > 120 |
|---|---|---|---|---|
| Z | 11 | 7 | 7 | 5 |

That is to say, when $30<n_s\leq45$, the number Z of the blades is 11;

when $45<n_s\leq60$, the number Z of the blades 202 is 7;

when $60<n_s\leq120$, the number Z of the blades 202 is 7;

when $n_s>120$, the number Z of the blades is 5;

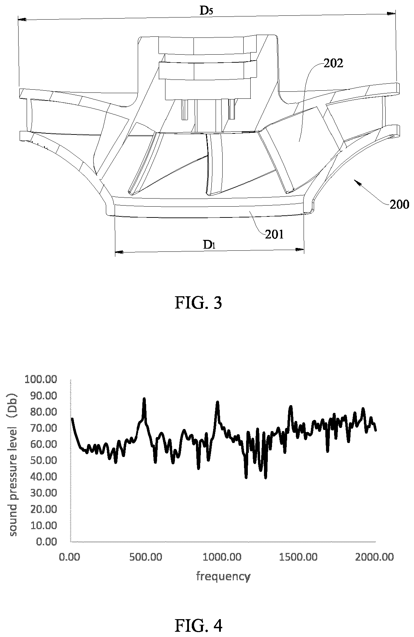

Step S22: determining a diameter $D_1$ of an impeller entrance 201, as shown in FIG. 3: $$D_1 = k_1\sqrt[3]{\frac{Q}{n}}$$ , wherein n is the rated speed of the pump, Q is the rated flow of the pump, $k_1$ is a noise reduction coefficient of the impeller entrance 201, and the noise reduction coefficient $k_1$ of the impeller entrance 201 is 4.5-5.0.

The impeller 200 designed according to the above steps can reduce the flow velocity at the impeller entrance 201 and avoid local cavitation at the edge of the blade entrance 201 through the designed impeller entrance 201; can avoid resonance with motor tooth slots and like and reduce noise and play a role in noise reduction through the designed number Z of blades 202.

In Step S21, the number Z of blades 202 obtained from the correspondence table between the specific speed $n_s$ of the pump and the number Z of blades 202 can effectively avoid resonance with motor slots and the like and reduce noise on the premise of ensuring efficiency.

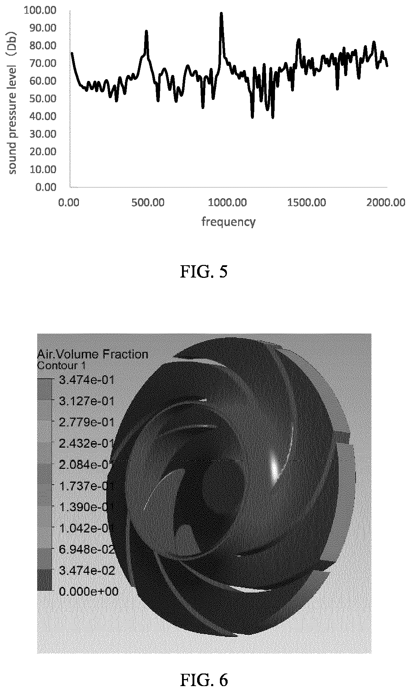

As shown in FIG. 4, it is a frequency spectrum diagram of a transient simulation of a pump which is obtained by designing according to the number Z of blades 202 provided in this embodiment under a rated flow and rated speed conditions. The number of blades 202 determined according to the specific speed $n_s$ of the pump in FIG. 4 is 7. As shown in FIG. 5, it is a frequency spectrum diagram of a transient simulation of a pump which is obtained by designing not according to the number Z of blades 202 provided in this embodiment under rated flow and rated speed conditions. The number of blades 202 in FIG. 5 is not determined according to the specific speed $n_s$ of the pump but is randomly set to 6. It can be seen by comparing FIG. 4 and FIG. 5 that the horizontal axis of both frequency spectra is frequency, and the vertical axis is sound pressure level. There are three obvious protrusions on both frequency spectra. In FIG. 4, the values of the corresponding horizontal axes of each protrusion correspond to one-fold blade frequency, two-fold blade frequency, and three-fold blade frequency, respectively. The values of the corresponding vertical axes of each protrusion are roughly the same, and the blade frequency and its multiples are avoided from other frequencies, indicating low noise. In FIG. 5, the values of the corresponding horizontal axes of each protrusion correspond to one-fold blade frequency, two-fold blade frequency, and three-fold blade, frequency, respectively. The values of the corresponding vertical axes of each protrusion are different, and at least one of the blade frequencies and its multiples resonates with other frequencies, resulting in a significant increase in sound pressure level and high noise. Specifically, the two-fold blade frequency in FIG. 5 resonates with other frequencies, resulting in a significant increase in sound pressure level and high noise.

It should be noted that the blade frequency is the frequency of the blade 202, which is a prominent frequency in fluid-induced noise. The frequency of the blade 202 is equal to the rotational frequency multiplied by the number Z of blades 202. Therefore, the number Z of blades 202 directly affects the frequency of the blades 202, which in turn directly affects the magnitude of fluid-induced noise.

In summary, the number Z of blades 202 obtained from the correspondence table between the specific speed $n_s$ of the pump and the number Z of blades 202 can reduce noise while ensuring efficiency.

In step S22, the diameter $D_1$ of the designed impeller entrance 201 can reduce the flow velocity of the impeller entrance 201 and avoid local cavitation at the edge of the blade inlet 201.

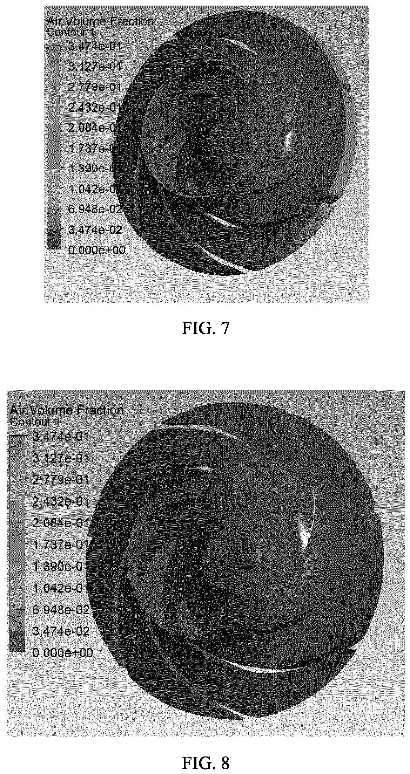

As shown in FIG. 6-FIG. 9, they are the cloud maps of the bubble volume fraction at the impeller entrance 201 with different values of the noise reduction coefficient $k_1$ of the impeller entrance 201. It can be seen by comparing FIG. 6-FIG.9 that, when the noise reduction coefficient $k_1$ of the impeller entrance 201 is less than 4.5, the flow velocity at the impeller entrance 201 is too high, and cavitation occurs on the entrance edge of the blade 202, causing larger cavitation noise (cavitation noise belongs to a type of fluid-induced noise), which in turn leads to a significant increase in fluid-induced noise; when the noise reduction coefficient $k_1$ of the impeller entrance 201 is greater than 4.5, the flow velocity at the impeller entrance 201 is appropriate, resulting in less fluid-induced noise.

Comprehensively considering the efficiency of the pump, the pump efficiency is equal to the waterpower/input power, and the water power is equal to the density*acceleration of gravity*head. The diameter $D_1$ of the impeller entrance 201 has an impact on the head: the larger the diameter $D_1$ of the impeller entrance 201, the smaller the head. When the noise reduction coefficient $k_1$ of the impeller entrance 201 is greater than 5.0, the diameter $D_1$ of the impeller entrance 201 significantly increases, and the head significantly decreases, resulting in a significant decrease in waterpower and thus a significant decrease in pump efficiency.

In summary, in step S22, it is appropriate to set the noise reduction coefficient $k_1$ of the impeller entrance 201 within the range of 4.5-5.0, which ensures both noise reduction and pump efficiency.

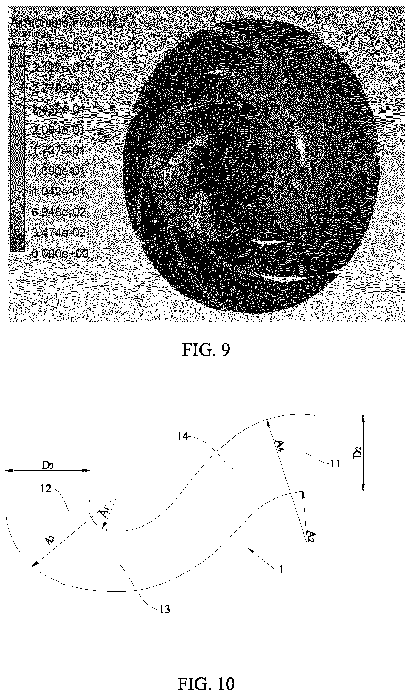

Further, the low-noise hydraulic design method for a pump also comprises the following step S3, which is the design of the entrance segment structure 1 of the pump, as shown in FIG. 10. Step S3 comprises the following steps:

Step S31: determining a diameter $D_2$ of the entrance segment inlet 11 and a diameter $D_3$ of the entrance segment outlet 12:
$$D_2 = D_3 = k_d \sqrt[3]{\frac{Q}{n}}$$
, wherein n is the rated speed of the pump, Q is the rated flow of the pump, $k_d$ is a noise reduction coefficient of the entrance segment structure 1, and the noise reduction coefficient $k_d$ of the entrance segment structure 1 is 4.5-5.0;

Step S32: determining a bending inner radius $A_1$ of the elbow segment 13 based on the diameter $D_2$ of the entrance segment inlet 11; and

Step S33: determining a bending inner radius $A_2$ of the lofting segment 14 based on a length of the entrance segment structure 1 and a noise reduction effect, while maintaining the cross-sectional area of the lofting segment 14 constant or varying uniformly.

The entrance segment structure 1 designed according to step S3 ensures that the fluid enters the entrance segment structure 1 slowly and evenly, reducing the occurring frequency of volute shedding, local cavitation and like in the entrance segment structure 1, effectively reducing pressure pulsation and flow-induced noise of the fluid.

In step S31, the diameter $D_2$ of the entrance segment inlet 11 is equal to the diameter $D_3$ of the entrance segment outlet 12, which ensures that the flow velocity of the entrance segment inlet 11 and the entrance segment outlet 12 does not change and remains stable, and also facilitates installation.

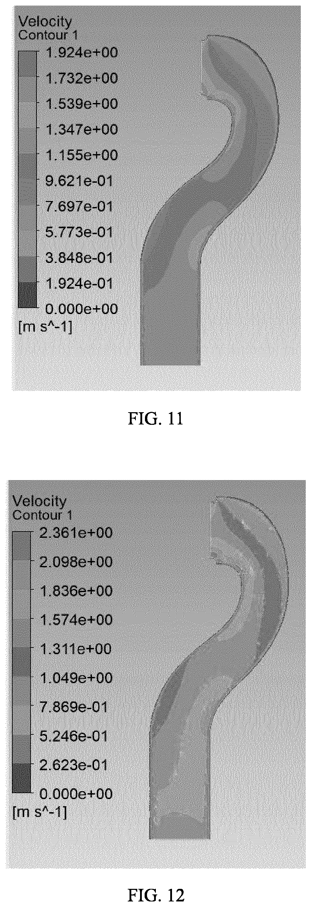

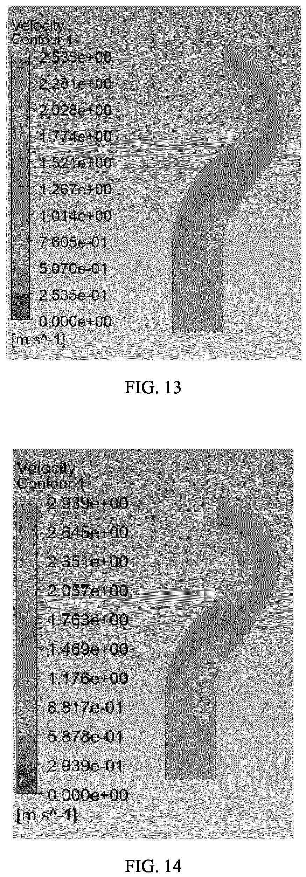

As shown in FIG. 11-FIG. 14, they are cloud maps of the entrance flow velocity of the entrance segment structure 1 with different values of the noise reduction coefficient $k_d$ of the entrance segment structure 1. It can be seen by comparing FIG. 11-FIG. 14 that when the noise reduction coefficient $k_d$ of the entrance segment structure 1 is less than 4.5, the flow velocity on the local structure of the entrance segment structure 1 increases significantly, resulting in a significant increase in fluid-induced noise; when the noise reduction coefficient $k_d$ of the entrance segment structure 1 is greater than 4.5, the flow velocity on the local structure of the entrance segment structure 1 is appropriate, resulting in a smaller fluid-induced noise.

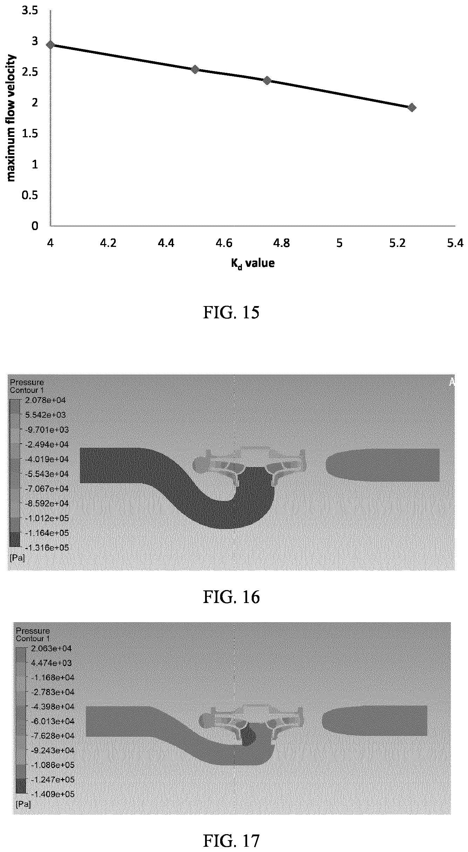

As shown in FIG. 15, it is a diagram of the change in maximum flow velocity of the entrance segment structure 1 with different values of the noise reduction coefficient $k_d$ of the entrance segment structure 1. It can be seen that, as the noise reduction coefficient $k_d$ of the entrance segment structure 1 increases, the maximum flow velocity of the entrance segment structure 1 decreases, and the flow velocity changes less, resulting in a more uniform flow velocity and more conducive to noise reduction.

Comprehensively considering the efficiency of the pump, the pump efficiency is equal to the waterpower/input power, and the waterpower is equal to the density*acceleration of gravity*head. The diameter $D_2$ of the entrance segment inlet 11 and the diameter $D_3$ of the entrance segment outlet 12 have an impact on the head: the larger diameter $D_2$ of the entrance segment inlet 11 and the diameter $D_3$ of the entrance segment outlet 12, the smaller the head. When the noise reduction coefficient $k_d$ of the entrance segment structure 1 is greater than 5.0, the diameter $D_2$ of the entrance segment inlet 11 and the diameter $D_3$ of the entrance segment outlet 12 significantly increases, and the head significantly decreases, resulting in a significant decrease in waterpower and thus a significant decrease in pump efficiency.

In summary, in step S31, it is appropriate to set the noise reduction coefficient $k_d$ of the entrance segment structure 1 within the range of 4.5-5.0, which ensures both noise reduction and pump efficiency.

It should be noted that in the various entrance flow velocity cloud maps of the entrance segment structure 1 shown in FIG. 11-FIG. 14, an extension segment will be added to the entrance segment inlet 11 during the simulation process to facilitate simulation convergence. The extension segment will not affect the accuracy of the simulation results.

In step S32, the bending inner radius $A_1$ of the elbow segment 13 is 0.4-0.6 times the diameter $D_2$ of the entrance segment inlet 11. This range of values, demonstrated through simulation and real-world testing, can make the fluid flow into the impeller 200 with uniform velocity and pressure, reduce the occurring frequency of volute shedding and local cavitation in the entrance segment structure 1, and effectively reduce pressure pulsation and flow-induced noise of the fluid.

Preferably, the bending inner radius $A_1$ of the elbow segment 13 is 0.6 times the diameter $D_2$ of the entrance segment inlet 11.

In step S33, the bending inner radius $A_2$ of the lofting segment 14 is constrained by the length of the entrance segment structure 1. The bending inner radius $A_2$ of the lofting segment 14 is taken as large as possible under the premise of space allowance, so that the change in the bending of the lofting 14 is more gradual and the impact loss of the fluid is reduced.

Further, step S3 further comprises step S34: determining the bending outer radius $A_3$ of the elbow segment 13: $A_3 = A_1 + D_3$.

Further, step S3 further comprises step S35: determining the bending outer radius $A_4$ of the lofting segment: $A_4 = A_2 + D_2$.

As shown in FIG. 16, it is a pressure cloud map of the entrance segment structure 1 and the impeller 200 which is obtained by designing according to the entrance segment structure 1 provided by this embodiment; as shown in FIG. 17, it is a pressure cloud map of the entrance segment structure 1 and the impeller 200 which is obtained by designing not according to the entrance segment structure 1 provided by this embodiment. In FIG. 17, the bending inner radius $A_2$ of the lofting segment 14 in the entrance segment structure 1 is smaller, and the bending inner radius $A_1$ of the elbow segment 13 is smaller. In the pressure cloud map, the separate part on the right refers to the pressure cloud map of the volute chamber outlet 21. It can be seen by comparing FIG. 16 and FIG. 17 that, the entrance segment structure 1 and the impeller 200 which is obtained by designing according to the entrance segment structure 1 provided by this embodiment shown in FIG. 16 have uniform pressure, stable flow, and can reduce noise; the entrance segment structure 1 and the impeller 200 which is obtained by designing not according to the entrance segment structure 1 provided by this embodiment shown in FIG. 17 have uneven pressure, local low pressure areas, unstable flow, and significant noise.

In summary, the design of the entrance segment structure 1 can effectively reduce noise.

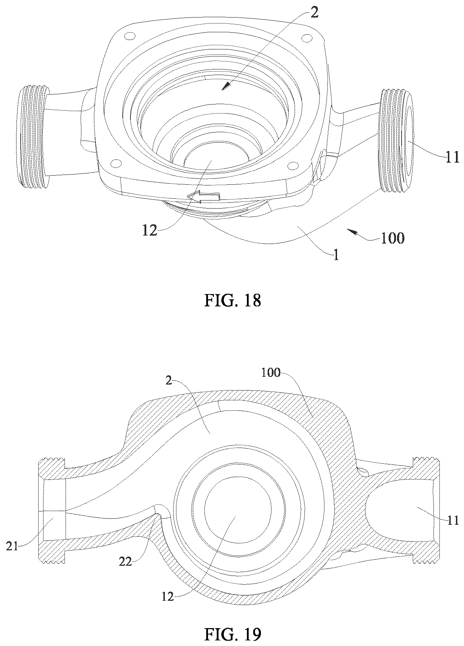

Further, the low-noise hydraulic design method for a pump also comprises the following step S4, which is the design of the volute chamber 2 of the pump, as shown in FIG. 18-FIG. 20. Step S4 comprises the following steps:

Step S41: determining a base circle radius $D_4$ of the volute chamber 2: $D_4 = 1.08*D_5$, wherein $D_5$ is an outer diameter of the impeller 200;

Step S42: determining a cross-sectional area $S_8$ of an eighth section 23, Step S42 comprising the following steps:

determining a flow velocity v of the eighth section 23: $$v = k_v\sqrt{2gH}$$ , wherein H is the rated head of the pump, $k_v$ is a flow velocity noise reduction coefficient of the eighth section 23, and the flow velocity noise reduction coefficient $k_v$ of the eighth section 23 is obtained based on the specific speed $n_s$ of the pump;

determining a flow $Q_8$ of the eighth section 23: $$Q_8 = \frac{360-\varphi_0}{360}Q$$ , wherein Q is the rated flow of the pump, $\varphi_0$ is an angle at which a volute tongue 22 is placed;

determining a cross-sectional area $S_8$ of the eighth section 23: $S_8 = Q_8/v$.

The volute chamber 2 designed according to Step S4 ensures that there is sufficient gap between the casing tongue 22 and the impeller 200 to avoid fluid flow blockage; at the same time, reduces the flow velocity in the volute chamber 2 to reduce fluid-induced noise.

In step S41, the base circle radius $D_4$ of the volute chamber 2 should be slightly larger than the outer diameter $D_5$ of the impeller to provide an appropriate gap between the volute tongue 22 and the impeller 200. If the gap is too small, it is easy to cause vibration and noise due to fluid flow obstruction. In this embodiment, the base circle radius $D_4$ of the volute chamber 2 is 1.08 times the outer diameter $D_5$ of the impeller. Through simulation and real-world testing, it has been verified that this can ensure an appropriate gap between the casing tongue 22 and the impeller 200.

For the convenience of subsequent description, the multiple of the base circle radius $D_4$ of the volute chamber 2 and the outer diameter $D_5$ of the impeller is defined as the base circle coefficient.

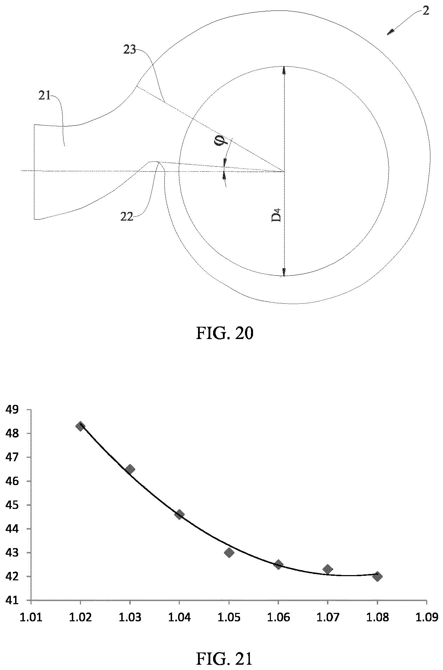

As shown in FIG. 21, it is a schematic diagram of the relationship between the sound pressure level and the base circle coefficient obtained from the transient simulation of the pump obtained by designing according to the volute chamber 2 provided by this embodiment under the condition of rated flow and rated speed. As can be seen, when the base circle coefficient is less than 1.08, the sound pressure level increases as the base circle coefficient decreases, that is, when the base circle coefficient is less than 1.08, the noise increases as the base circle coefficient decreases.

Comprehensively considering the efficiency of the pump, the pump efficiency is equal to the waterpower/input power, and the water power is equal to the density*acceleration of gravity*head. The base circle radius $D_4$ of the volute chamber 2 has an impact on the head: the larger the base circle radius $D_4$ of the volute chamber 2, the smaller the head. When the base circle coefficient is greater than 1.08, the base circle radius $D_4$ of the volute chamber 2 significantly increases, and the head significantly decreases, resulting in a significant decrease in waterpower and thus a significant decrease in pump efficiency.

In summary, in step S41, it is appropriate to select a base circle coefficient of 1.08, which ensures both noise reduction and pump efficiency.

In step S42, if the flow velocity v of the eighth section 23 is too high, it can cause significant impact noise. Therefore, the cross-sectional area $S_8$ of the eighth section 23 is inferred based on the appropriate flow velocity v of the eighth section 23 to ensure that the flow velocity v of the eighth section 23 is appropriate to reduce noise.

Further, the specific speeds $n_s$ of the pump within different preset ranges correspond to different preset values of the flow velocity noise reduction coefficient $k_v$ of the eighth section 23.

Further, the correspondence table between the specific speed $n_s$ of the pump and the flow velocity noise reduction coefficient $k_v$ of the eighth section 23 is as follows:

| $n_s$ | 30~45 | 45~60 | 60~120 | > 120 |
|---|---|---|---|---|
| $K_v$ | 0.5 | 0.45 | 0.375 | 0.3 |

that is to say, when $30<n_s\leq45$, the flow velocity noise reduction coefficient $k_v$ of the eighth section 23 is 0.5;

when $45<n_s\leq60$, the flow velocity noise reduction coefficient $k_v$ of the eighth section 23 is 0.45;

when $60<n_s\leq120$, the flow velocity noise reduction coefficient $k_v$ of the eighth section 23 is 0.375;

when $n_s$>120, the flow velocity noise reduction coefficient $k_v$ of the eighth section 23 is 0.3.

Based on the flow velocity noise reduction coefficient $k_v$ of the eighth section 23 obtained from the above correspondence table and the cross-sectional area $S_8$ of the eighth section 23 obtained from it, it is possible to reduce the flow velocity in the volute chamber 2 and reduce fluid-induced noise.

It should be noted that the eighth section 23 of the volute chamber 2 is a commonly used academic term in the pump industry with a clear definition and does not require special definition. For specific information, please refer to the industry reference book.

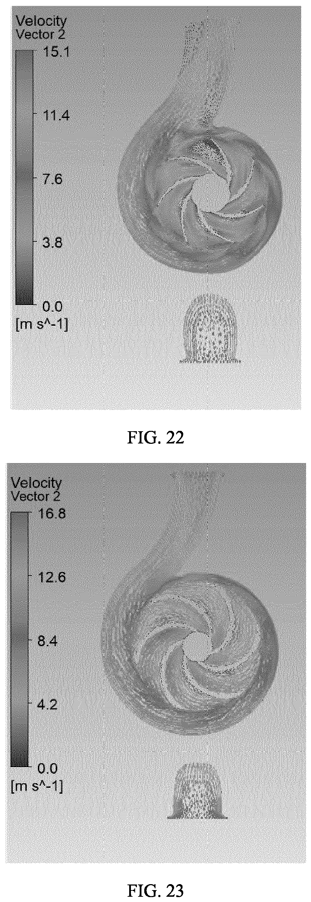

As shown in FIG. 22, it is a velocity vector diagram of the volute chamber 2 designed according to the volute chamber 2 provided in this embodiment. In FIG. 22, the flow velocity noise reduction coefficient $k_v$ of the eighth section 23 obtained based on the specific speed $n_s$ of the pump is 0.375. As shown in FIG. 23, it is a velocity vector diagram of the volute chamber 2 designed not according to the volute chamber 2 provided in this embodiment, the flow velocity noise reduction coefficient $k_v$ of the eighth section 23 may be arbitrarily taken as 0.4。 It can be seen by comparing FIG. 22 and FIG. 23 that compared to the maximum speed of the volute chamber 2 designed according to this embodiment, the maximum speed of the volute chamber 2 designed not according to this embodiment increases significantly, resulting in greater noise.

In summary, the volute chamber 2 designed according to the volute chamber 2 provided in this embodiment can ensure that there is sufficient gap between the casing tongue 22 and the impeller 200 to avoid fluid flow blockage; at the same time, reduce the flow velocity in the volute chamber 2 to reduce fluid-induced noise.

In this embodiment, a pump is also provided, which is designed according to the above-mentioned low-noise hydraulic design method for a pump and has good noise reduction effect.

Although the present invention has been described in detail with general descriptions, specific embodiments, and tests, it is obvious to those skilled in the art that some modifications or improvements can be made on the basis of the present invention. Therefore, these modifications or improvements made without deviating from the spirit of the present invention all fall within the scope of protection of the present invention.

**Claims**

1. A low-noise hydraulic design method for a pump, **characterized by** comprising the following steps:

   Step S1: calculating a specific speed $n_s$ of the pump: $n_s = \dfrac{3.65n\sqrt{Q}}{\sqrt[4]{H^3}}$, wherein, n is a rated speed of the pump, Q is a rated flow of the pump, and H is a rated head of the pump; and
   Step S2: designing an impeller (200), the step S2 comprising the following steps:

   Step S21: determining a number Z of blades (202) of the impeller (200) based on the specific speed $n_s$ of the pump calculated in step S1;

   when 30<$n_s$≤45, the number Z of the blades (202) is 11;
   when 45<$n_s$≤60, the number Z of the blades (202) is 7;
   when 60<$n_s$≤120, the number Z of the blades (202) is 7;
   when $n_s$>120, the number Z of the blades (202) is 5; and

   Step S22: determining a diameter $D_1$ of an impeller entrance (201): $D_1 = k_1 \sqrt[3]{\dfrac{Q}{n}}$, wherein, n is the rated speed of the pump, Q is the rated flow of the pump, $k_1$ is a noise reduction coefficient of the impeller entrance (201), and the noise reduction coefficient $k_1$ of the impeller entrance (201) is 4.5-5.0.

2. The low-noise hydraulic design method for a pump according to claim 1, **characterized by** further comprising the following steps: step S3: designing an entrance segment structure (1) of the pump, wherein the entrance segment structure (1) comprises an elbow segment (13) provided with an entrance segment outlet (12), and a lofting segment (14) provided with an entrance segment inlet (11), and the elbow segment (13) and the lofting segment (14) are connected, the step S3 comprising the following steps:

   Step S31: determining a diameter $D_2$ of the entrance segment inlet (11) and a diameter $D_3$ of the entrance

$$D_2 = D_3 = k_d \sqrt[3]{\frac{Q}{n}}$$

segment outlet (12): , wherein n is the rated speed of the pump, Q is the rated flow of the pump, $k_d$ is a noise reduction coefficient of the entrance segment structure (1), and the noise reduction coefficient $k_d$ of the entrance segment structure (1) is 4.5-5.0;

Step S32: determining a bending inner radius $A_1$ of the elbow segment (13) based on the diameter $D_2$ of the entrance segment inlet (11); and

Step S33: determining a bending inner radius $A_2$ of the lofting segment (14) based on a length of the entrance segment structure (1) and a noise reduction effect, while maintaining the cross-sectional area of the lofting segment (14) constant or varying uniformly.

3. The low-noise hydraulic design method for a pump according to claim 2, **characterized in that**, the bending inner radius $A_1$ of the elbow segment (13) is 0.4-0.6 times the diameter $D_2$ of the entrance segment inlet (11).

4. The low-noise hydraulic design method for a pump according to claim 3, **characterized in that**, the bending inner radius $A_1$ of the elbow segment (13) is 0.6 times the diameter $D_2$ of the entrance segment inlet (11).

5. The low-noise hydraulic design method for a pump according to claim 2, **characterized in that**, the step S3 further comprises step S34: determining a bending outer radius $A_3$ of the elbow segment (13): $A_3 = A_1 + D_3$.

6. The low-noise hydraulic design method for a pump according to claim 2, **characterized in that**, the step S3 further comprises step S35: determining a bending outer radius $A_4$ of the lofting segment (14): $A_4 = A_2 + D_2$.

7. The low-noise hydraulic design method for a pump according to claim 1, **characterized by** further comprising the following steps: step S4: designing a volute chamber (2) of the pump, the step S4 comprising the following steps:

Step S41: determining a base circle radius $D_4$ of the volute chamber (2): $D_4 = 1.08*D_5$, wherein $D_5$ is an outer diameter of the impeller (200); and

Step S42: determining a cross-sectional area $S_8$ of an eighth section (23), the step S42 comprising the following steps:

determining a flow velocity v of the eighth section (23): $v = k_v \sqrt{2gH}$, wherein H is the rated head of the pump, $k_v$ is a flow velocity noise reduction coefficient of the eighth section (23), and the flow velocity noise reduction coefficient $k_v$ of the eighth section (23) is obtained based on the specific speed $n_s$ of the pump;

determining a flow $Q_8$ of the eighth section (23): $Q_8 = \frac{360-\varphi_0}{360}Q$, wherein Q is the rated flow of the pump, $\varphi_0$ is an angle at which a volute tongue is placed; and

determining a cross-sectional area $S_8$ of the eighth section (23): $S_8 = Q_8/v$.

8. The low-noise hydraulic design method for a pump according to claim 7, **characterized in that**, the specific speeds $n_s$ of the pump within different preset ranges correspond to different preset values of the flow velocity noise reduction coefficient $k_v$ of the eighth section (23).

9. The low-noise hydraulic design method for a pump according to claim 8, **characterized in that**, a correspondence between the specific speed $n_s$ of the pump and the flow velocity noise reduction coefficient $k_v$ of the eighth section (23) is as follows:

when $30 < n_s \leq 45$, the flow velocity noise reduction coefficient $k_v$ of the eighth section (23) is 0.5;
when $45 < n_s \leq 60$, the flow velocity noise reduction coefficient $k_v$ of the eighth section (23) is 0.45;
when $60 < n_s \leq 120$, the flow velocity noise reduction coefficient $k_v$ of the eighth section (23) is 0.375;
when $n_s > 120$, the flow velocity noise reduction coefficient $k_v$ of the eighth section (23) is 0.3.

10. A pump, **characterized in that** the pump is designed according to the low-noise hydraulic design method for a pump according to any one of claims 1-9.

FIG. 1

FIG. 2

FIG. 3

FIG. 4

FIG. 5

FIG. 6

FIG. 7

FIG. 8

FIG. 9

FIG. 10

EP 4 617 496 A1

FIG. 11

FIG. 12

18

FIG. 13

FIG. 14

FIG. 15

FIG. 16

FIG. 17

FIG. 18

FIG. 19

FIG. 20

FIG. 21

FIG. 22

FIG. 23

Europäisches
Patentamt

European
Patent Office

Office européen
des brevets

## EUROPEAN SEARCH REPORT

**Application Number**

EP 24 20 3000

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 352 868 A (UNIV WUHAN) 16 October 2013 (2013-10-16) | 10 | INV. F04D1/00 |
| A | * paragraphs [0001], [0030], [0031], [0034], [0039] * * figures 1-7 * | 1-9 | F04D29/02 F04D29/22 F04D29/24 F04D29/42 |
| X | CN 104 358 707 A (UNIV JIANGSU) 18 February 2015 (2015-02-18) | 10 | F04D29/66 |
| A | * paragraphs [0001], [0008], [0009], [0019], [0021] * * figures 1-3 * | 1-9 | |
| X | WO 2022/151608 A1 (UNIV JIANGSU [CN]) 21 July 2022 (2022-07-21) | 10 | |
| A | * pages 8-10 * * figures 6, 7 * | 1-9 | |
| X | CN 117 646 740 A (UNIV JIANGSU) 5 March 2024 (2024-03-05) | 10 | |
| A | * paragraphs [0001], [0013] - [0016] * * figure 3 * | 1-9 | TECHNICAL FIELDS SEARCHED (IPC) |
| | | | F04D |

The present search report has been drawn up for all claims

| Place of search | Date of completion of the search | Examiner |
|---|---|---|
| The Hague | 21 February 2025 | De Tobel, David |

EPO FORM 1503 03.82 (P04C01)

EP 4 617 496 A1

**ANNEX TO THE EUROPEAN SEARCH REPORT
ON EUROPEAN PATENT APPLICATION NO.**

EP 24 20 3000

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | Publication date | Patent family member(s) | | Publication date |
|---|---|---|---|---|---|
| CN 103352868 | A | 16-10-2013 | NONE | | |
| CN 104358707 | A | 18-02-2015 | NONE | | |
| WO 2022151608 | A1 | 21-07-2022 | CN | 112861279 A | 28-05-2021 |
| | | | WO | 2022151608 A1 | 21-07-2022 |
| CN 117646740 | A | 05-03-2024 | NONE | | |

For more details about this annex : see Official Journal of the European Patent Office, No. 12/82